# EUROPEAN PATENT APPLICATION

(11) **EP 4 163 317 A1**
(43) Date of publication of application: **12.04.2023**
(21) Application number: 22184897.1
(22) Date of filing: 14.07.2022
(51) Int. Cl.: C08G 63/695, C09D 167/00

(54) **COATING COMPOSITION**

(30) Priority: 07.10.2021 KR 20210133190
(71) Applicant: KCC Corporation, Seoul 06608 (KR)
(72) Inventor: JIN, Jong Hun, 06608 Seoul (KR); KIM, Rag Hee, 06608 Seoul (KR); PARK, Jong Chan, 06608 Seoul (KR); HONG, Seung Min, 06608 Seoul (KR); PARK, Jong Yun, 06608 Seoul (KR); HWANG, Sung Woo, 06608 Seoul (KR); JEONG, Hyuk, 06608 Seoul (KR)
(74) Representative: Patentwerk B.V.

(57) **Abstract**

Embodiments relate to a coating composition having excellent non-combustibility and weather resistance.

## Description

### BACKGROUND

### 1. Field

Embodiments relate to a coating composition having excellent non-combustibility and weather resistance.

### 2. Description of the Related Art

Pre-coated metal (PCM) coatings can secure excellent processability, hardness, scratch resistance, and the like, and thus are being used for various purposes such as household appliances and construction materials. However, a resin, such as polyester, epoxy, urethane, acryl, or polyvinylidene fluoride (PVdF), which is flammable, is applied to the conventional PCM coatings, and thus it is difficult to secure non-combustibility. Although a technique of applying a ceramic resin and a flame retardant has been proposed in order to secure non-combustibility, it has been difficult to satisfy processability and adhesion required in the PCM coatings due to the brittleness of the resin.

Particularly, in the case of the PCM coatings applied as an exterior material of the construction materials, excellent weather resistance is required for a coating film, and research and development for improving weather resistance of a coating composition have been actively conducted. For example, Korean Patent Publication No. 2019-0045165 discloses a coating composition containing a room-temperature-curable resin and core shell microparticles that include tetragonal titanium oxide solid solution microparticles, in which tin and manganese have been dissolved, as the core and have a shell of silicon oxide on the outer side of the core. However, the conventional coating composition has insufficient weather resistance to prevent deterioration under a harsh environment, and particularly, when the coating composition is used in a region with a large amount of sunlight or a region with a large amount of annual precipitation, there is a limitation in that deterioration of a coating film, such as a change in color, gloss degradation, or occurrence of chalking, occurs severely.

Accordingly, it is required to develop a coating composition that secures non-combustibility and simultaneously has excellent processability, adhesion, corrosion resistance, and weather resistance.

### SUMMARY

An aspect of the present invention provides a coating composition having excellent non-combustibility and weather resistance.

An aspect of the present invention provides a coating composition comprising a silicone modified polyester resin, a curing agent, a pigment, and a flame retardant.

### EFFECT OF THE INVENTION

The coating composition according to the present invention exhibits non-combustibility and excellent processability, adhesion, corrosion resistance, and weather resistance at the same time.

### DETAILED DESCRIPTION

Hereinafter, the present invention will be described in detail. However, the present description is not intended to limit the invention to the following content, and when necessary, various components can be modified in various manners or can be optionally used together with each other. It is to be understood that the present invention includes all modifications, equivalents, and alternatives falling within the spirit and scope of the present invention.

As used herein, a "glass transition temperature" is measured by a typical method known in the art, and may be measured by, for example, differential scanning calorimetry (DSC). A "viscosity" is measured by a typical method known in the art, and may be measured using, for example, Gardner viscometer (Bubble viscometer) at room temperature (25 °C). A "weight average molecular weight" is measured by a typical method known in the art, and may be measured by, for example, a gel permeation chromatography (GPC) method. The values of functional groups such as "acid value" and "hydroxyl value" are measured by a typical method known in the art, and may be measured by, for example, titration.

The coating composition according to the present invention comprises a silicone modified polyester resin, a curing agent, a pigment, and a flame retardant. In addition, the coating composition according to the present invention may further comprise a solvent and an additive commonly used in the art as necessary.

### Silicone modified polyester resin

The coating composition according to the present invention comprises a silicone modified polyester (SMP) resin as a main resin. The silicone modified polyester resin reacts with a curing agent to form a coating film, and serves to secure basic properties of the coating film, such as corrosion resistance, processability, chemical resistance, hardness, and adhesion, and particularly, serves to improve weather resistance and non-combustibility of the coating film.

The silicone modified polyester resin may be prepared by condensation polymerization of a silicone intermediate, an alcohol monomer, and an acid monomer.

The silicone intermediate may be a polysiloxane resin having a reactive group such as a siloxane group or a methoxy group in the molecule.

As the alcohol monomer, a polyfunctional alcohol may be used, and an aliphatic alcohol, an aromatic alcohol, or a mixture thereof may be used. For example, ethylene glycol, propylene glycol, 1,2-butylene glycol, neopentyl glycol, 1,6-hexanediol, pentaerythritol, trimethylol propane, glycerol, bisphenol-A (BPA), alkoxylated alcohol such as BA320TK, or the like, may be used alone or in combination of two or more thereof.

For example, the alcohol monomer may comprise a trifunctional or lower aliphatic alcohol and a tetrafunctional aliphatic alcohol, and may include, for example, 1,6-hexanediol and pentaerythritol. The alcohol monomer may comprise a trifunctional or lower aliphatic alcohol and a tetrafunctional aliphatic alcohol in a weight ratio of 80 to 60:20 to 40, for example, 75 to 65:25 to 35. By using the trifunctional or lower aliphatic alcohol and the tetrafunctional aliphatic alcohol at the mixing ratio, the cross-linking density of the silicon modified polyester resin may be increased, and as a result, the processability and weather resistance of the coating film may be improved. When the mixing ratio of the trifunctional or lower aliphatic alcohol to the tetrafunctional aliphatic alcohol is less than the above-described range, the processability may be deteriorated because the cross-linking density is excessively increased, and when the mixing ratio is greater than the above-described range, the weather resistance may be deteriorated because the cross-linking density is decreased.

As the acid monomer, an aliphatic acid, an aromatic acid, or a mixture thereof may be used. For example, adipic acid, sebacic acid, succinic acid, isophthalic acid, phthalic anhydride, terephthalic acid, trimellitic anhydride, benzenetricarboxylic acid anhydride, naphthalene tricarboxylic acid anhydride, or the like may be used alone or in combination of two or more thereof.

The acid monomer may comprise an aromatic acid and an aliphatic acid, and may include, for example, phthalic anhydride and adipic acid. When the acid monomer of the combination is used, weather resistance and processability may be further improved. For example, the acid monomer may comprise an aromatic acid and an aliphatic acid in a weight ratio of 20 to 40:80 to 60, for example, 25 to 35:75 to 65. When the mixing ratio of the aliphatic acid to the aromatic acid is less than the above-described range, the length of the main chain is shortened and thus the processability may be deteriorated, and when the mixing ratio is greater than the above-described range, the weather resistance may be deteriorated.

The mixing ratio of the alcohol monomer and the acid monomer may be 1.0 to 2.0:1, for example, 1.2 to 1.4:1. When the mixing ratio of the alcohol monomer to the acid monomer is less than the above-described range, the molecular weight may increase and thus the mixture may gelate, and when the mixing ratio is greater than the above-described range, the molecular weight may decrease and thus the weather resistance may be deteriorated.

The silicone modified polyester resin may have a weight average molecular weight of 10,000 g/mol to 30,000 g/mol, for example, 20,000 g/mol to 30,000 g/mol. When the weight average molecular weight of the silicone modified polyester resin is less than the above-described range, the adhesion to a substrate and the processability may be deteriorated, and when the weight average molecular weight is greater than the above-described range, the compatibility may be deteriorated.

The silicone modified polyester resin may have a glass transition temperature of 5 °C to 30 °C, for example, 5 °C to 15 °C. When the glass transition temperature of the silicone modified polyester resin is less than the above-described range, the chemical resistance and water resistance may be deteriorated, and when the glass transition temperature is greater than the above-described range, the flexibility of the resin may be lowered, thereby deteriorating processability of the coatings.

The silicone modified polyester resin may have a hydroxyl value of 80 KOHmg/g to 160 KOHmg/g, for example, 120 KOHmg/g to 160 KOHmg/g, and an acid value of 20 KOHmg/g or less, for example, 5 KOHmg/g to 20 KOHmg/g. When the hydroxyl value and the acid value of the silicone modified polyester resin are less than the above-described range, the water resistance and curability may be deteriorated, and when the hydroxyl value and the acid value are greater than the above-described range, the processability and moldability may be deteriorated.

The silicone modified polyester resin may have a silicone content (based on solid content) of 60 wt% to 80 wt%, for example, 65 wt% to 75 wt%. When the silicon content is out of the above-described range, the silicone modified polyester resin may gelate.

The silicone modified polyester resin may have a solid content of 60% to 95%, for example, 70% to 80%, and a viscosity of Z to Z6.

The content of the silicone modified polyester resin may be 10 wt% to 50 wt%, for example, 15 wt% to 35 wt%, based on the total weight of the coating composition. When the content of the silicone modified polyester resin is out of the above-described range, the compatibility of the coatings may be deteriorated, and thus the weather resistance may be deteriorated.

### Curing agent

The coating composition according to the present invention comprises a curing agent. The curing agent plays a role of forming a stable coating film by causing a curing reaction with the above-described silicone modified polyester resin component. The curing agent may comprise a melamine resin or a urethane resin.

As the melamine resin, a methoxy melamine resin, a butoxy melamine resin, a methoxy/butoxy mixed melamine resin, or the like may be used alone or in a combination of two or more thereof.

The melamine resin may have a weight average molecular weight of 100 g/mol to 3,000 g/mol, for example, 300 g/mol to 1,000 g/mol, and a solid content of 70% to 100%, for example, 75% to 100%. When the weight average molecular weight of the melamine resin is less than the above-described range, the adhesion to the substrate and the processability may be deteriorated, and when the weight average molecular weight is greater than the above-described range, the compatibility may be deteriorated. The melamine resin may have a viscosity of X to Z2 and a specific gravity of 1.15 to 1.25.

The urethane resin is prepared by a reaction between polyol and isocyanate.

As the polyol, a polyether polyol, a polyester polyol, a polycaprolactone polyol, a polytetramethylene ether diol, a polybutadiene diol, a polytetramethylene ether diol, a polypropylene oxide diol, a polybutylene oxide diol, triol, or the like may be used alone or in a combination of two or more thereof.

As the isocyanate, methylene diphenyl diisocyanate (MDI), toluene diisocyanate (TDI), hexamethylene diisocyanate (HMDI), isophorone diisocyanate (IPDI), meta xylene diisocyanate (MXDI), tetramethylxylene diisocyanate (TMXDI), diisocyanate (H12 MDI) which is made to be alicyclic by adding hydrogen to a benzene ring of the MDI, diisocyanate (hydrogenated XDI) which is made to be alicyclic by adding hydrogen to a benzene ring of xylene diisocyanate (XDI), or the like may be used alone or in combination of two or more thereof.

The viscosity (23 °C) of the urethane resin may be 1,000 mPa.s to 7,000 mPa.s, for example, 2,800 mPa.s to 5,800 mPa.s, the solid content (NV) may be 60% to 90%, for example, 70% to 80%, the number average molecular weight may be 500 g/mol to 3,000 g/mol, for example, 1,000 g/mol to 1,500 g/mol, the weight average molecular weight may be 1,000 g/mol to 5,000 g/mol, for example, 1,700 g/mol to 2,300 g/mol, and the isocyanate equivalent weight may be 200 g/eq to 600 g/eq, for example, 350 g/eq to 450 g/eq. When the number average molecular weight of the urethane resin is less than the above-described range, the curing degree and processability may be deteriorated, and when the number average molecular weight of the urethane resin is greater than the above-described range, the hardness and adhesion may be deteriorated. When the isocyanate equivalent weight of the urethane resin is less than the above-described range, the hardness and chemical resistance may be deteriorated, and when the isocyanate equivalent weight of the urethane resin is greater than the above-described range, the processability may be deteriorated.

The content of the curing agent may be 1 wt% to 10 wt%, for example, 1 wt% to 5 wt%, based on the total weight of the coating composition. When the content of the curing agent satisfies the above-described range, the curing degree of the coating film may increase, and properties of the coating film may be improved.

### Pigment

The coating composition according to the present invention comprises a pigment. As the pigment, a typical colored pigment known in the art may be used.

The colored pigment may be used to impart a desired color to the coatings or to increase the strength or gloss of the coating film. As the colored pigment, an organic pigment, an inorganic pigment, a metallic pigment, aluminum (Al)-paste, pearl, or the like may be used alone or in combination of two or more thereof. For example, titanium oxide white, cyanine blue, iron oxide red, carbon black, chromium yellow, or the like may be used alone or in combination of two or more thereof.

The content of the pigment may be 20 wt% to 50 wt%, for example, 25 wt% to 35 wt%, based on the total weight of the coating composition. When the content of the pigment satisfies the above-described range, the curing degree and covering power of the coating film may be improved.

### Flame retardant

The coating composition according to the present invention comprises a flame retardant. The flame retardant serves to delay the combustion time of the coating film and reduce the toxicity of the combustion gas.

The coating composition of the present invention may include at least one of a phosphorus-based flame retardant and a non-phosphorus-based flame retardant as a flame retardant. Unlike a halogen flame retardant, the phosphorus-based flame retardant and the non-phosphorus-based flame retardant are environmentally friendly because dioxin, which is a carcinogen, is not generated when combusted, and may secure excellent flame retardancy by effectively blocking heat in the combustion process.

As the phosphorus-based flame retardant, at least one among ammonium polyphosphate, red phosphorus, tris(2-chloroethyl)phosphate, isopropylphenyl diphenyl phosphate, triphenyl phosphate, triethyl phosphate, trioctyl phosphate, resorcinol diphosphate, and tricresyl phosphate may be used. For example, the phosphorus-based flame retardant may be ammonium polyphosphate.

As the non-phosphorus-based flame retardant, at least one among aluminum hydroxide (Al(OH)₃), calcium carbonate (CaCO₃), antimony trioxide (Sb₂O₃), antimony pentaoxide (Sb₂O₅), molybdenum trioxide (MoO₃), zinc stannate (Zn₂SnO₄), magnesium carbonate (Mg(HCO₃)₂), zinc borate, magnesium hydroxide (Mg(OH)₂), and melamine cyanurate. For example, the non-phosphorus-based flame retardant may be aluminum hydroxide.

The flame retardant may be contained in an amount of 5 wt% to 35 wt%, for example, 20 wt% to 30 wt%, based on the total weight of the coating composition. When the content of the flame retardant is less than the above-described range, the coating film may not secure sufficient flame retardancy, and when the content is greater than the above-described range, the durability, corrosion resistance, and appearance characteristics may be deteriorated.

In the coating composition according to the present invention, a binder component (the silicon modified polyester resin and the melamine resin) and a pigment component (the pigment and the flame retardant) may be mixed in a weight ratio of 1:1 to 5, for example, 1:2 to 3. When the mixing ratio of the pigment component to the binder component is less than the above-described range, non-combustibility may be deteriorated because the content of the organic component resin in the coating film is high, and when the mixing ratio is greater than the above-described range, the pigment content in the coatings is high, and thus the curing degree and the coating storage properties are deteriorated, and the coating film is brittle, and thus the processability is deteriorated, and chalking may occur.

In the coating composition according to the present invention, the silicone modified polyester resin and the flame retardant may be mixed in a weight ratio (based on solid content) of 1:0.5 to 2, for example, 1:0.8 to 1. When the mixing ratio of the flame retardant to the silicone modified polyester resin is less than the above-described range, the non-combustibility may be deteriorated, and when the mixing ratio is greater than the above-described range, the weather resistance and the curing degree may be deteriorated.

### Solvent

The coating composition according to the present invention may further comprise a solvent. The solvent serves to improve the workability of the coatings.

As the solvent, an aromatic hydrocarbon-based solvent, an ester-based solvent, an ether-based solvent, an alcohol-based solvent, or a mixture thereof may be used. Non-limiting examples of the usable solvent include cyclohexanone, xylene, toluene, cellosolve acetate, methylethylketone, dibasic ester, propylene glycol methyl ether acetate, butyl acetate, ethyl acetate, propylene glycol monomethyl acetate, 3-methoxy butyl acetate, ethylene glycol butyl ether, diethylene glycol methyl ether, diethylene glycol ethyl ether, diethylene glycol butyl ether, methanol, ethanol, isopropanol, n-butanol, amyl alcohol, butyl carbitol, isophorone, or a mixture thereof.

The content of the solvent may be a residual amount satisfying 100 wt% of the total weight of the coating composition, and for example, may be 5 wt% to 25 wt%, for example, 10 wt% to 20 wt%, based on the total weight of the coating composition. When the content of the solvent falls within the above-described range, the workability is improved and excellent properties of the coating film may be exhibited.

### Additive

The coating composition of the present invention may optionally further comprise additives commonly used in the coating field within a range that does not impair the intrinsic properties of the composition. Non-limiting examples of the usable additives in the present invention include a leveling agent, an antifoaming agent, a catalyst, or the like.

The leveling agent is used to improve the appearance characteristics of the coating film while the adhesive strength in the composition is increased by leveling the coating composition so that the coating composition is coated flat and smooth. As the leveling agent, any typical leveling agent known in the art may be used without limitation, and an acrylic-based leveling agent, a silicone-based leveling agent, a polyester-based leveling agent, an amine-based leveling agent, or the like may be used.

The antifoaming agent serves to improve the appearance characteristics of the coating film by suppressing bubbles generated during coatng. As the antifoaming agent, any typical antifoaming agent known in the art may be used without limitation, and a silicone-based or non-silicone-based (*e*.*g*., acrylic-based) antifoaming agent may be used.

The catalyst serves to accelerate a curing reaction and improve high-temperature reliability and the period of continuous workability of the coating film. As the catalyst, an amine-based compound, a phosphorus-based compound, an acid compound (*e*.*g*., p-toluene sulfonic acid (p-TSA)), a tin-based compound, or the like may be used.

In addition, an anti-sedimentation agent (*e.g.*, fumed silica) for preventing sedimentation of the coatings, a wax (*e*.*g*., paraffin wax) for imparting slip properties to the surface of the coating film, a light stabilizer (*e*.*g*., HALS) for absorbing radicals generated by ultraviolet rays, a matting agent (*e*.*g*., silicon dioxide) for adjusting gloss, or the like may be used.

The additives may be appropriately added within a content range known in the art, and may be included in an amount of 0.1 wt% to 20 wt%, respectively, for example, based on the total weight of the coating composition. When the content of the additives is within the above-described range, the appearance and hardness of the coating film may be improved.

Hereinafter, the present invention will be described in more detail with reference to examples. However, the following examples are only for assisting the understanding of the present invention, and the scope of the present invention is not limited to the examples.

### [Experimental Examples 1-12]

A coating composition of each Experimental Example was prepared by mixing a silicone modified polyester resin, a curing agent, a pigment, a flame retardant, a solvent, and additives according to composition listed in Table 1 and Table 2 below.

**[Table 1]**

| Unit (wt%) | Experimental Example 1 | Experimental Example 2 | Experimental Example 3 | Experimental Example 4 | Experimental Example 5 | Experimental Example 6 |
|---|---|---|---|---|---|---|
| Resin 1 | 24 | | | 25 | | |
| Resin 2 | | 26 | | | | 24 |
| Resin 3 | | | 29 | | | |
| Resin 4 | | | | | 26 | |
| Resin 5 | | | | | | |
| Curing agent 1 | 3 | | | 3.5 | 3 | |
| Curing agent 2 | | 3.3 | 2 | | | |
| Curing agent 3 | | | | | | |
| Curing agent 4 | | | | | | 5 |
| Pigment | 30 | 40 | 30 | 36 | 30 | 30 |
| Flame retardant | 23 | 15 | 21 | 17 | 22 | 23 |
| Anti -sedimentation agent | 0.3 | 0.3 | 0.3 | 0.3 | 0.3 | 0.3 |
| Acid catalyst | 0.9 | 1 | 0.9 | 1.1 | 0.9 | 1.4 |
| Leveling agent | 1 | 1 | 1 | 1 | 1 | 1 |
| Antifoaming agent | 1.2 | 1.2 | 1.2 | 1.2 | 1.2 | 1.2 |
| Wax | 1 | 1 | 1 | 1 | 1 | 1 |
| Light stabilizer | 1 | 1 | 1 | 1 | 1 | 1 |
| Matting agent | 0.6 | 0.6 | 0.6 | 0.6 | 0.6 | 0.6 |
| Solvent | 14 | 9.6 | 12 | 12.3 | 13 | 11.5 |
| Total | 100 | 100 | 100 | 100 | 100 | 100 |

**[Table 2]**

| Unit (wt%) | Experimental Example 7 | Experimental Example 8 | Experimental Example 9 | Experimental Example 10 | Experimental Example 11 | Experimental Example 12 |
|---|---|---|---|---|---|---|
| Resin 1 | | 26 | | 20 | 33 | |
| Resin 2 | | | | | | |
| Resin 3 | 42 | | 31 | | | |
| Resin 4 | | | | | | |
| Resin 5 | | | | | | 24 |
| Curing agent 1 | 4.5 | | 3.3 | | | 3 |
| Curing agent 2 | | 1 | | 2.5 | 4 | |
| Curing agent 3 | | | | | | |
| Curing agent 4 | | | | | | |
| Pigment | 20 | 15 | 37 | 35 | 42 | 30 |
| Flame retardant | 15 | 40 | 9 | 25 | 0 | 23 |
| Anti-sedimentation agent | 0.3 | 0.3 | 0.3 | 0.3 | 0.3 | 0.3 |
| Acid catalyst | 1.4 | 0.9 | 1 | 0.8 | 1.2 | 0.9 |
| Leveling agent | 1 | 1 | 1 | 1 | 1 | 1 |
| Antifoaming agent | 1.2 | 1.2 | 1.2 | 1.2 | 1 | 1.2 |
| Wax | 0.5 | 1 | 1 | 1 | 1 | 1 |
| Light stabilizer | 0.5 | 1 | 1 | 1 | 1 | 1 |
| Matting agent | 0.6 | 0.6 | 2 | 0.6 | 1.2 | 0.6 |
| Solvent | 13 | 12 | 12.2 | 11.6 | 14.3 | 14 |
| Total | 100 | 100 | 100 | 100 | 100 | 100 |

Resin 1: Silicone modified polyester resin (1,6-hexanediol:pentaerythritol=70:30, phthalic anhydride:adipic acid=25:75, alcohol:acid=1.2:1, Mw 22,000, Tg 10 °C, OHv 130 KOHmg/g, silicone content 66%, NV 75%, viscosity Z6)
Resin 2: Silicone modified polyester resin (1,6-hexanediol:pentaerythritol=65:35, phthalic anhydride:adipic acid=35:65, alcohol:acid=1.3:1, Mw 28,000, Tg 15 °C, OHv 140 KOHmg/g, silicone content 73%, NV 75%, viscosity Z4)
Resin 3: Silicone modified polyester resin (1,6-hexanediol:pentaerythritol=75:25, phthalic anhydride:adipic acid=30:70, alcohol:acid=1.6:1, Mw 25,000, Tg 7 °C, OHv 160 KOHmg/g, silicone content 60%, NV 65%, viscosity Z2)
Resin 4: Silicone modified polyester resin (1,6-hexanediol:pentaerythritol=70:30, phthalic anhydride:adipic acid=25:75, alcohol:acid=1.5:1, Mw 32,000, Tg 12 °C, OHv 155 KOHmg/g, silicone content 32%, NV 70%, viscosity Y)
Resin 5: Silicone modified polyester resin (1,6-hexanediol:trimethylol propane=85:15, phthalic anhydride:terephthalic acid=75:25, alcohol:acid=1.5:1, Mw 25,000, Tg 18 °C, OHv 150 KOHmg/g, silicone content 70%, NV 65%, viscosity Z1)
Curing agent 1: Melamine resin (Mw 350, NV 95%, viscosity X, specific gravity 1.2)
Curing agent 2: Melamine resin (Mw 850, NV 100%, viscosity X, specific gravity 1.15)
Curing agent 3: Melamine resin (Mw 550, NV 100%, viscosity Z2, specific gravity 1.25)
Curing agent 4: Melamine resin (Mw 3,200, NV 100%, viscosity X, specific gravity 1)
Pigment: Titanium dioxide
Flame retardant: Aluminum hydroxide
Anti-sedimentation agent: Fumed silica (silicon dioxide)
Acid catalyst: Para-toluenesulfonic acid (p-TSA)
Leveling agent: Acrylic copolymer (solid content 45%, specific gravity 0.94)
Antifoaming agent: Thermo plastic acryl (solid content 63%, specific gravity 0.93)
Wax: Paraffin wax
Light stabilizer: Hindered amine light stabilizer (HALS)
Matting agent: SiO₂ (particle size of 6.5-7.5 µm, pore volume of 2.0 mL/g)
Solvent: K #100/#150/PMA/cyclohxanone

### [Property Evaluation]

The properties of the coating composition prepared according to each Experimental Example were measured by the following method, and then the results are shown in Tables 3 and 4 below.

### Curing degree (MEK Rubbing)

Methyl ethyl ketone (M.E.K) was coated on gauze to measure the number of times of reciprocation under a load of 1 Kg (excellent: 100 times or more, good: 50-100 times (exclusive of 100), unsatisfactory: 20-50 times (exclusive of 50), poor: less than 20 times).

### Processability

180° processing was performed at room temperature, and crack state and adhesion degree were measured.

### Pencil hardness

The number of traces was observed by drawing five lines on the coated specimen with a Mitsubishi Uni pencil (excellent: 3H or more, good: H-2H, unsatisfactory: HB-F, poor: less than HB).

### Adhesion (C.C.E.T.)

After 100 cross-cuts were performed on the specimen at spaces of 1 mm in width and length, 6 mm indentation was performed, and peeling-off was performed with tape, and then the peeling state was evaluated.

### Impact resistance

A ball having a diameter of 1/2 inch was dropped from a distance of 50 cm at a load of 500 g and the occurrence of cracks in the coating film was observed.

### Weather resistance

After 5,000 hours of irradiation with QUV-A TEST manufactured by Q-LAB, according to ASTM D 4587, color difference, gloss retention, and chalking were measured.
(Excellent: color difference of 2.0 or less, gloss retention of 70% or more, no chalking,
Good: color difference of 2.0-3.0 (exclusive of 2.0), gloss retention of 50-70% (exclusive of 70), no chalking,
Unsatisfactory: color difference of 3.0-5.0 (exclusive of 3.0), gloss retention of 30-50% (exclusive of 50), no chalking,
Poor: color difference of greater than 5.0, gloss retention of less than 30%, chalking)

### Non-combustibility

A test for certification of nonflammable materials was conducted according to Notification No. 2020-263 of the Ministry of Land, Infrastructure and Transport. As a result of the non-combustibility test, the mass reduction rate, the temperature difference between maximum temperature and final equilibrium temperature, and the suitability of the hazardous gas test were evaluated.
(Excellent: mass reduction rate of 10% or less, temperature difference of less than 10 K, suitable for the hazardous gas test,
Good: mass reduction rate of 10-30% (exclusive of 10), temperature difference of 10-20 K (exclusive of 10), suitable for the hazardous gas test,
Unsatisfactory: mass reduction rate of 10-30% (exclusive of 10), temperature difference of 20-30 K (exclusive of 20), suitable for the hazardous gas test,
Poor: mass reduction rate of greater than 30%, temperature difference of greater than 30 K, unsuitable for the hazardous gas test)

### Formability

During the press operation, it was confirmed whether or not the coating film was scratched.

**[Table 3]**

| Division | Experimental Example 1 | Experimental Example 2 | Experimental Example 3 | Experimental Example 4 | Experimental Example 5 | Experimental Example 6 |
|---|---|---|---|---|---|---|
| Curing degree | ⊚ | ⊚ | ⊚ | ⊚ | ⊚ | ⊚ |
| Processability | ⊚ | ○ | ⊚ | ⊚ | ⊚ | △ |
| Pencil hardness | ⊚ | ⊚ | ⊚ | ⊚ | ⊚ | ⊚ |
| C.C.E.T | ⊚ | ⊚ | ⊚ | ⊚ | ⊚ | ○ |
| Impact resistance | ⊚ | ⊚ | ⊚ | ⊚ | ⊚ | △ |
| Weather resistance | ⊚ | ⊚ | ⊚ | ⊚ | △ | ○ |
| Non-combustibility | ⊚ | ⊚ | ⊚ | ○ | X | ⊚ |
| Formability | ⊚ | ⊚ | ⊚ | ⊚ | ⊚ | △ |

| | | | | | | |
|---|---|---|---|---|---|---|
| ⊚: Excellent, ○: Good, △: Unsatisfactory, X: Poor | | | | | | |

**[Table 4]**

| Division | Experimental Example 7 | Experimental Example 8 | Experimental Example 9 | Experimental Example 10 | Experimental Example 11 | Experimental Example 12 |
|---|---|---|---|---|---|---|
| Curing degree | ⊚ | ○ | ⊚ | △ | ⊚ | ○ |
| Processability | ⊚ | △ | ⊚ | △ | ⊚ | X |
| Pencil hardness | ⊚ | ⊚ | ○ | ○ | O | ○ |
| C.C.E.T | ⊚ | ⊚ | ⊚ | ○ | ⊚ | ○ |
| Impact resistance | ⊚ | O | ⊚ | △ | ⊚ | ○ |
| Weather resistance | ⊚ | △ | ⊚ | △ | ⊚ | × |
| Non-combustibility | X | ⊚ | X | ⊚ | X | ○ |
| Formability | ⊚ | △ | ⊚ | △ | ⊚ | △ |

| | | | | | | |
|---|---|---|---|---|---|---|
| ⊚: Excellent, ○: Good, △: Unsatisfactory, X: Poor | | | | | | |

As confirmed from the results of Tables 3 and 4 above, the coating compositions of Experimental Examples 1-11 using the silicone modified polyester resin according to the present invention exhibited excellent properties in overall measurement items as compared with the coating composition of Experimental Example 12 using the silicone modified polyester resin having a composition outside the scope of the present invention.

## Claims

1. A coating composition comprising a silicone modified polyester resin, a curing agent, a pigment, and a flame retardant,
wherein the silicone modified polyester resin is prepared by condensation polymerization of a silicone intermediate, an alcohol monomer, and an acid monomer,
the alcohol monomer comprises a trifunctional or lower aliphatic alcohol and a tetrafunctional aliphatic alcohol in a weight ratio of 80 to 60:20 to 40,
the acid monomer comprises an aromatic acid and an aliphatic acid in a weight ratio of 20 to 40:80 to 60, and
the mixing ratio of the alcohol monomer and the acid monomer is 1.0 to 2.0:1 by weight.

2. The coating composition of claim 1, wherein the silicone modified polyester resin has a weight average molecular weight of 10,000 g/mol to 30,000 g/mol, a glass transition temperature of 5 °C to 30 °C, a hydroxyl value of 80 KOHmg/g to 160 KOHmg/g, an acid value of 20 KOHmg/g or less, a silicone content (based on a solid content) of 60 wt% to 80 wt%, a solid content of 60% to 95%, and a viscosity of Z to Z6.

3. The coating composition of claim 1, wherein the curing agent comprises a melamine resin having a weight average molecular weight of 100 g/mol to 3,000 g/mol, a solid content of 70 to 100, a viscosity of X to Z2, and a specific gravity of 1.15 to 1.25.

4. The coating composition of claim 1, wherein the coating composition comprises 10 wt% to 50 wt% of the silicone modified polyester resin, 1 wt% to 10 wt% of the curing agent, 20 wt% to 50 wt% of the pigment, and 5 wt% to 35 wt% of the flame retardant, based on the total weight of the coating composition.

5. The coating composition of claim 1, wherein the coating composition comprises a binder component (the silicone modified polyester resin and the curing agent) and a pigment component (the pigment and the flame retardant) in a weight ratio of 1:1 to 5.

6. The coating composition of claim 1, wherein the coating composition comprises the silicone modified polyester resin and the flame retardant in a weight ratio of 1:0.5 to 2 (based on a solid content).
